# EUROPÄISCHE PATENTSCHRIFT

(11) **EP 1 432 632 B1**
(45) Veröffentlichungstag und Bekanntmachung des Hinweises auf die Patenterteilung: **27.12.2006**
(21) Anmeldenummer: 01980441.8
(22) Anmeldetag: 26.09.2001
(51) Int. Cl.: B65H 19/10

(54) **ABDECKBAND**
COVER STRIP
BANDE DE PROTECTION

(43) Veröffentlichungstag der Anmeldung: 30.06.2004
(73) Patentinhaber: tesa AG, 20253 Hamburg (DE)
(72) Erfinder: BEUSCH, Karl-Heinz, 47918 Tönisvorst (DE); EIKMEIER, Markus, 22297 Hamburg (DE); GASSNER, Thomas, 25436 Heidgraben (DE); GEBBEKEN, Bernhard, 21075 Hamburg (DE); NAGEL, Christoph, 22529 Hamburg (DE)
(86) Internationale Anmeldenummer: PCT/EP2001/011122
(87) Internationale Veröffentlichungsnummer: WO 2003/029119

(56) Entgegenhaltungen:
- EP-A- 0 970 905
- DE-A- 19 632 689

## Beschreibung

Die Erfindung betrifft ein Abdeckband zur zumindest partiellen Abdeckung eines Klebebandes für den fliegenden Rollenwechsel im Kontaktbereich mit einem Antriebsgurt.

Für den fliegenden Rollenwechsel an gurtangetriebenen Rollenwechslem sind unterschiedliche Verklebungsmuster bekannt. Die Verklebungen werden mit Befestigungsetiketten und doppelseitigem Klebeband in einem V- oder W-Profil oder aber als gerade Linie durchgeführt. Darüber kommen seit kurzer Zeit sogenannte integrierte Klebebänder für den fliegenden Rollenwechsel zum Einsatz, welche alle drei grundlegenden Funktionen für den fliegenden Rollenwechsel:
1. Befestigen der oberen Bahn der neuen Rohmaterialrolle
2. Kontakt der ablaufenden Bahn zur neuen Rohmaterialrolle
3. Prozeßsicheres Öffnen der neuen Rohmaterialrolle erfüllen.

Das nichtklebende Abdecken von ansonaten offenliegenden klebenden Bereichen zeigt beispielsweise die DE 196 32 689 A2, die als nächstliegender Stand der Technik anzusehen ist, hier ist ein Klebeband für die dynamische Belastung beim Spliceverfahren offenbart, dessen Papierträger spaltet und mit seinen Resten die Klebemassen abdeckt. Von dieser Art ist auch ein Klebeband gemäß DE 199 02 179 A1, welches an seiner nichtklebenden Rückseite ein doppelseitig klebendes Klebeband mit einem spaltfähigen Papierträger aufweist.

In allen Verfahren kann das doppelseitige Klebeband bzw. das integrierte Klebeband für den fliegenden Rollenwechsel im Kontaktbereich des Gurtes zur Rohmaterialrolle ausgelassen werden oder aber mit einem geeigneten Abdeckband/-etikett abgedeckt werden. Zum Abdecken sind hierbei die Verwendung von Trennpapierband sowie von einseitigem Klebeband bekannt, welche bündig zur vorderen Kante des Klebebandes im Kontaktbereich des Antriebsgurtes aufgebracht werden.

Um eine Verklebung der alten mit der neuen Bahn im Kontaktbereich des Gurtes zu erzeugen, werden die zuvor genannten Abdeckbänder im Abstand (X) hinter der vorderen Klebebandkante aufgebracht. Um den Kontaktbereich der Gurte weiter zu verstärken, wird ebenfalls Abdeckband mit ausgestanzten Rundlöchern eingesetzt.

Die zuvor genannten Methoden haben den Nachteil erheblicher Fehlermöglichkeiten, denn der Abstand des Abdeckbandes zur vorderen Kante des Klebebandes kann bei der manuellen Aufbringung nur schwerlich konstant gehalten werden, wenn keine Positionierungshilfe zur Verfügung steht. Bei zu geringem Abstand des Abdeckbandes von der Klebebandkante sowie beim Einsatz von Abdeckband mit ausgestanzten Rundlöchern, die nur eine geringe effektive Verklebungsfläche bieten, kann dies dazu führen, daß die Verklebung im Kontaktbereich des Gurtes zu gering ist und sich während des Maschinendurchlaufs öffnet und eine Lufttasche bildet, wodurch sich die beiden Bahnen in der Position des Antriebsgurtes voneinander entfemen. Hierbei kann eine der beiden Bahnen in einem engen Spalt auf dem Bahnweg an Maschinenteilen, z.B. Fingerschutzstangen, anstoßen und abreißen. Bei zu großem Abstand des Abdeckbandes zur Klebebandkante kann es zum Ankleben des Antriebsgurtes während der Beschleunigung der Rohmaterialrolle kommen, so daß die neue Rolle während der Beschleunigung frühzeitig öffnet. In der Praxis zeigen sich auch bei diesen Abdeckbändem Nachteile, zunächst dadurch, dass ein fliegender Rollenwechsel nicht gelingt, vielmehr als Reißer endet, ohne dass ein Grund dafür ersichtlich wäre.

Aufgabe der Erfindung war es daher, ein Abdeckband zur Verfügung zu stellen, welches die Nachteile des Standes der Technik vermeidet.

Gelöst wird die Aufgabe durch ein Abdeckband, wie es in Anspruch 1 vorgestellt wird. Die Unteransprüche beschreiben verbesserte Ausführungsformen eines solchen Abdeckbandes sowie ein Verfahren zur Durchführung eines fliegenden Rollenwechsels unter Anwendung eines Abdeckbandes.

Dementsprechend betrifft der Anspruch 1 ein Abdeckband zur zumindest partiellen Abdeckung eines Klebebandes für den fliegenden Rollenwechsel im Kontaktbereich des Antriebsgurtes, mit zwei Längskanten, einer Vorderseite und einer Rückseite, wobei an zumindest einer der Längskanten des Abdeckbandes Positionierhilfen angebracht sind, welche die Positionierung des Abdeckbandes in einem definierten Abstand zur Kante des Klebebandes ermöglichen.

In einer vorteilhaften Ausführungsform liegen die Positionierhilfen in Form von Zacken, Halb- oder Teilkreisen, Halb- oder Teilellipsen oder dergleichen vor. Im erfinderischen Sinne sind aber auch alle Formen möglich, die es erlauben, einen definierten Abstand zur Kante des Klebebandes einzustellen. Dabei kann es sich sowohl um regelmäßige als auch um unregelmäßige Formen handeln.
Die Positionierhilfen weisen bevorzugt eine Höhe H von 1 bis 7 mm, insbesondere von 2 bis 5 mm auf und/oder sind äquidistant zueinander. Dabei können die Positionierhilfen direkt aufeinander folgend, also beispielsweise in Form eines Sägezahnmusters, aber auch mit definierten Zwischenräumen angebracht sein. Realisierbar sind aber auch Ausführungen des Abdeckbandes, bei denen die Positionierhilfen in unregelmäßiger Abfolge vorliegen.

Vorteilhaft können auch Varianten des Abdeckbandes sein, bei denen unterschiedlich große Positionierhilfen, beispielsweise unterschiedlicher Höhe H, vorgesehen sind. Dies ermöglicht es, das Abdeckband für verschiedenen Einsatzzwecke in jeweils definierten, aber wählbaren Abständen zur Kante des abzudeckenden Klebebandes anzubringen.

In einer besonders vorteilhaften Ausführungsform des erfinderischen Abdeckbandes befinden sich Aussparungen in der Fläche, insbesondere in Form von Langlöchern, welche mit Ihrer Längsachse senkrecht oder schräg zur Längsrichtung des Abdeckbandes (und in der Regel somit auch des Klebebandes) verlaufen. Sehr vorteilhaft können die Langlöcher in einem Winkel von bis zu 45° zur Längsrichtung des Abdeckbandes, ganz besonders vorteilhaft in einem Winkel von 30° vorliegen.

Es hat sich als besonders vorteilhaft herausgestellt, wenn die Dicke des Abdeckbandes 20 bis 150 µm, insbesondere 35 bis 130 µm beträgt.

Eine günstige Variante des erfinderischen Abdeckbandes weist zumindest eine Schicht einer Selbstklebemasse auf.

Weiterhin ist es vorteilhaft, das erfinderische Abdeckband mit Perforationen und/oder Schnitten, welche senkrecht oder schräg zur Längsrichtung des Abdeckbandes verlaufen, zu versehen.
Die Länge L_{P} der Abdeckbandabschnitte zwischen zwei Perforationslinien oder zwei Abschnitten kann je nach Anwendung frei gewählt werden und beispielsweise optimal auf die Breite der Antriebsgurte angepaßt werden, so daß durch Abtrennung jeweils eines Teils des Abdeckbandes an einer derartigen Perforation beziehungsweise einem derartigen Schnitt ein Abdeckbandstück erhalten wird, dessen Länge (entsprechend L_{P}) beispielsweise im wesentlichen der Breite des Antriebsgurtes (oder der vorgegebenen Breite der Gurtaussparung in den Flachbahnverarbeitungsmaschinen, z.B. in Druckmaschinen) entspricht und somit hervorragend zur Abdeckung eines Splice-Klebebandes auf einer neuen Rolle im Bereich der Antriebsgurte verwendet werden kann. Die Abdeckbandstücke können vorteilhaft aber auch etwas größer oder kleiner sein als die Breite der Gurte.
In einer besonders bevorzugten Ausführungsform des Abdeckbandes beträgt die Länge L_{P} vorteilhaft zwischen 40 und 50 mm, besonders zwischen 40 und 45 mm, insbesondere 42,5 mm.
Durch Abtrennung nicht an jeder folgenden, sondern erst an später folgenden Perforationen beziehungsweise Einschnitten können Abdeckbandstücke erhalten werden, welche ein Vielfaches der Länge L_{P} aufweisen, so daß auf diese Weise Abdeckbandstücke von 85 mm, 127,5 mm, 170 mm und so fort erzeugt werden können.

Das erfinderische Abdeckband kann vorteilhaft selbst bereits eine definierte Länge L_{E} aufweisen, beispielsweise also in Etikettform vorliegen. Die Länge L_{E} des Abdeckbandes bzw. Abdecketiketts entspricht dabei im wesentlichen der Breite der Antriebsgurte, kann aber auch etwas größer oder kleiner sein als die Breite der Gurte. Die Länge L_{E} entspricht hier bevorzugt den Werten, welche vorstehend für L_{P} angegeben sind.

In einer bevorzugten Ausführungsform liegt das Abdeckband als Abdeckung eines selbstklebenden Klebebandes vor. Dies gilt insbesondere für die Darreichung eines solchen Klebebandes auf einer Rolle oder dergleichen: Das Klebeband ist bevorzugt ein solches, wie es für den Splicevorgang zum Endloskleben bei einem fliegenden Rollenwechsel, beispielsweise in der Papierverarbeitenden Industrie, verwendet wird. Dieses Klebeband bringt in der hier vorgestellten Weise in Form seines Trennmaterials die Abdeckung entsprechend dem Erfindungsgedanken bereits mit.
In einer derartigen Ausführungsform ist es vorteilhaft, wenn das Abdeckband mit einem Schlitz in Längsrichtung versehen ist, so daß das Abdeckband in zwei Schritten unabhängig voneinander von dem Klebeband abgezogen werden kann. Der Schlitz ist bevorzugt in einem Abstand von 5 bis 40 mm von der Längskante des Klebebandes angeordnet, welche der Längskante gegenüber liegt, in deren Nähe das spaltfähige System angeordnet ist. Die Aussparungen können sich bevorzugt nur auf einem Teil des längsgeteilten Abdeckbandes beschränken, aber auch in beiden Teilen des längsgeteilten Abdeckbandes vorgesehen sein. Entsprechendes gilt für die Ausrüstung mit den Positionierhilfen.

Besonders vorteilhaft ist es, wenn ein Klebeband verwendet wird, welches zumindest einen Hauptträger, eine Selbstklebemasse auf der Oberseite des Hauptträgers sowie zumindest einen Streifen eines selbstklebenden, spaltfähigen Systems auf der Unterseite aufweist. Derartige Klebebänder werden beispielweise in den Schriften DE 196 28 317 A1, DE 196 32 689 A1, DE 198 30 673 A1, DE 198 30 674 A1, DE 199 02 179 A1 beschrieben. Es sei hier aber darauf hingewiesen, daß sich das erfinderische Abdeckband prinzipiell für alle Klebebänder einsetzen läßt, welche insbesondere für das Endloskleben eingesetzt werden.
Vorteilhaft wird ein spaltfähiges System verwendet, welches eine deutlich geringere Spaltfestigkeit aufweist als ein Papierträger, der Zugkräfte aufnehmen muß. Als spaltfähige Systeme, insbesondere als Spaltpapiere kommen zum Beispiel folgende Papiere oder Papierverbundsysteme in Frage:
- Duplexpapiere (definiert zusammen laminierte Papiere, der Spaltvorgang verläuft extrem homogen, es entstehen keine Spannungsspitzen, z.B. durch inhomogene Verdichtung. Diese Papiere werden zur Herstellung von Tapeten und Filtern eingesetzt.
- Leicht spaltbare Papiersysteme, z.B. nicht naßfeste Papiere
- Definiert zusammen geleimte hochverdichtete Papiere (⇒ Papier mit einer hohen Spaltfestigkeit). Die Leimung kann beispielsweise mit Stärke, stärkehaltigen Derivaten, Tapetenkleister auf Basis von Methylcellulose (Methylan®, Henkel KGaA, Düsseldorf) aber auch auf Basis von Polyvinylalkoholderivaten erfolgen.
- Auch ein spaltendes System gemäß DE 198 41 609 A1 kann eingesetzt werden. Die Spaltkräfte werden hier über die Größe der Verklebungspunkte bestimmt.

Sehr vorteilhaft werden spaltfähige Systeme eingesetzt, welche Spaltkräfte von 15 bis 40 cN/cm, bevorzugt von 15 bis 35 cN/cm, sehr bevorzugt von 17 bis 25 cN/cm aufweisen.

Die Erfindung betrifft weiterhin ein Spliceverfahren für den fliegenden Rollenwechsel von auf Rollen aufgewickelten Flachbahnmaterial, bei welchem die oberste Papierbahn einer neuen Rolle mit einem Klebeband, welches mit zumindest einem Hauptträger, zumindest einer Schicht einer Selbstklebemasse auf der Oberseite und zumindest einem selbstklebenden spaltfähigen System auf der Unterseite ausgerüstet ist, an der darunterliegenden Bahn fixiert wird und ein zum Spliceverfahren benötigter Teil der Selbstklebemasse offenliegt, woraufhin die so ausgerüstete neue Rolle neben eine fast gänzlich abgespulte zu ersetzende alte Rolle plaziert wird und durch Antriebsgurte auf die im wesentlichen gleiche Drehgeschwindigkeit wie diese beschleunigt wird, wobei zumindest der Großteil der Bereiche des Klebebandes, welche sich im Kontaktbereich mit den Antriebsgurten befinden, durch ein Abdeckband abgedeckt werden, wobei die Positionierung des Abdeckbandes unter Zuhilfenahme von Positionierungshilfen am Abdeckband geschieht, worauf die neue Rolle dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich das spaltfähige System derart spaltet, daß nach dem Spaltvorgang keine klebenden Bereiche offenliegen.
Sehr bevorzugt geschieht die Abdeckung der Bereiche des Klebebandes im Kontaktbereich mit den Gurten derart, daß an der vorderen Kante 1 bis 7 mm Klebemasse offenliegend freibleiben.

Besonders bevorzugt wird für ein derartiges Spliceverfahren als Abdeckband ein solches wie vorstehend beschrieben verwendet, wobei jede Ausführungsform des erfinderischen Abdeckbandes eingesetzt werden kann.

In einer günstigen Weiterentwicklung des erfinderischen Verfahrens wird das Splice-Klebeband rechtwinklig zur laufenden Papierbahn, also quer über die neue Rolle, oder aber in einem spitzen Winkel von bis zu 30°, insbesondere von bis zu 10° zur Querrichtung verklebt.

Bei der Verwendung des erfinderischen Abdeckbandes beziehungsweise bei dem erfinderischen Verfahren ist eine Unterbrechung der Verklebung des Klebebandes auf der neuen Rolle im Bereich der Antriebsgurte nicht mehr erforderlich. Das Abdeckband wird dabei derart auf den Klebestreifen aufgebracht, daß die Positionierhilfen bündig mit der vorderen Längskante des Splice-Klebebandes abschließen, so daß ein definierter Bereich des Klebebandes an der vorderen Längskante offenliegt.
Die Breite des definierten (klebend verbleibenden) Bereiches entspricht dabei der Höhe der Positionierhilfen.

Ein Verkleben der Gurte wird durch das Abdecken der freiliegenden Klebemasse mit dem Abdeckband verhindert. Dadurch kann der Klebstreifen in über die volle Breite der Rolle des Flachbahnmaterials verklebt werden, ohne daß im Bereich der Gurte Unterbrechungen notwendig sind. Der Splicevorgang wird hierdurch gegenüber den herkömmlichen Vorgehensweisen erheblich verbessert, insbesondere bei Einbringung von Längslöchern in dem Abdeckband.

Dabei werden die Gurtbereiche, also die Bereiche des Klebebandes, über welche die Antriebsgurte hinweglaufen, in der geschilderten Weise mit dem Abdeckband abgedeckt. Bei schmalen eng zueinander stehenden Gurten können auch zwei nebeneinanderliegenden Gurtbereiche mit einem einzigen Abdeckband-Abschnitt abgedeckt werden.

Versuche haben gezeigt, daß die Splicesicherheit durch die Erfindung signifikant erhöht wird. Das Auftreten von Reißern ist nur in sehr verminderter Weise zu beobachten.
Des weiteren wird bei Verwendung eines Splice-Klebebandes, bei welchem das spaltfähige System sehr geringe Spaltkräfte aufweist, die Effizienz bei Rollenwechsel mit geringen Geschwindigkeiten (zero speed splice) deutlich erhöht. Gerade bei geringen Geschwindigkeiten fehlt der Impuls, der das Spalten des spaltbaren Systems unterstützt.

Im folgenden soll die Erfindung anhand eines Ausführungsbeispiels näher beschrieben werden, ohne sie aber damit unnötig einschränken zu wollen. Die Zeichnungen zeigen dementsprechend eine schematische Darstellung eines erfindungsgemäßen Abdeckbandes und seine Anwendung und soll die Erfindung damit beispielhaft erläutern.

Es zeigen:
- Fig. 1A: eine schematische Aufsicht auf ein erfindungsgemäßes Abdeckband ohne Längslöcher
- Fig. 1B: eine schematische Aufsicht auf ein erfindungsgemäßes Abdeckband mit Längslöchern
- Fig. 2: eine schematische Sicht auf eine für den fliegenden Rollenwechsel ausgerüstete Rolle, versehen mit einem Klebeband für den Splice und einem erfindungsgemäßen Abdeckband zur Abdeckung im Kontaktbereich mit den Antriebsgurten
- Fig. 3: eine Detailvergrößerung aus Fig. 2 im Kontaktbereich mit den Antriebsgurten
- Fig. 4: eine seitliche schematische Ansicht des Klebebandes gemäß Fig. 2, aufgeklebt auf eine Papierrolle im Kontaktbereich mit den Antriebsgurten und fertig für den fliegenden Rollenwechsel
- Fig. 5: eine seitliche schematische Ansicht gemäß Fig. 3, aber nach erfolgtem fliegenden Rollenwechsel
- Fig. 6: eine seitliche Ansicht gemäß Fig. 4, aber im Bereich, der nicht mit den Antriebsgurten in Kontakt kommt

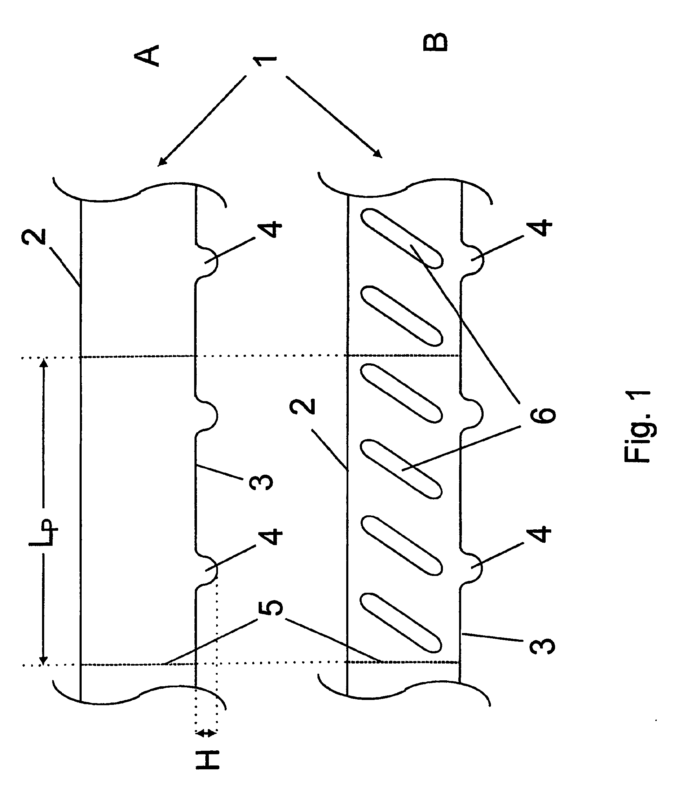

Im einzelnen zeigt Fig. 1A ein Abdeckband bestehend aus zwei Längskanten 2 und 3, in regelmäßigen Abständen ausgestanzte Positionierhilfen 4 mit einer bevorzugten Höhe H von 1 bis 7 mm entlang der Längskante 3 aufweisend. Femer sind in regelmäßigen Abständen L_{P} Perforationen 5 in Querrichtung vorgesehen, um das Klebeband definiert ablängen zu können. Technisch besonders vorteilhafte Ablängungen sind:

| | |
|---|---|
| 42,5 mm | für MegTec Rollenwechsler |
| 85 mm | für WIFAG/GOSS Rollenwechsler |
| 127,5 mm | für KBA Rollenwechsler (Tiefdruck) |
| 170 mm | für MAN Roland, KBA (Offset), Cerutti (Tiefdruck) Rollenwechsler; |

diese Werte entsprechen den von den jeweiligen Maschinenherstellern vorgegebenen Breiten für die Gurtaussparung bei herkömmlicher Vorgehensweise ohne Abdeckbänder.

In Fig. 1 B ist ein gleichartiges Abdeckband, jedoch mit ausgestanzten Langlöchern 6 gezeigt. Die Langlöcher 6 können quer zur Laufrichtung eingestanzt sein oder auch schräg zur Laufrichtung verlaufen; in der hier dargestellten Ausführungsform ist ein diagonaler Verlauf vorgesehen.

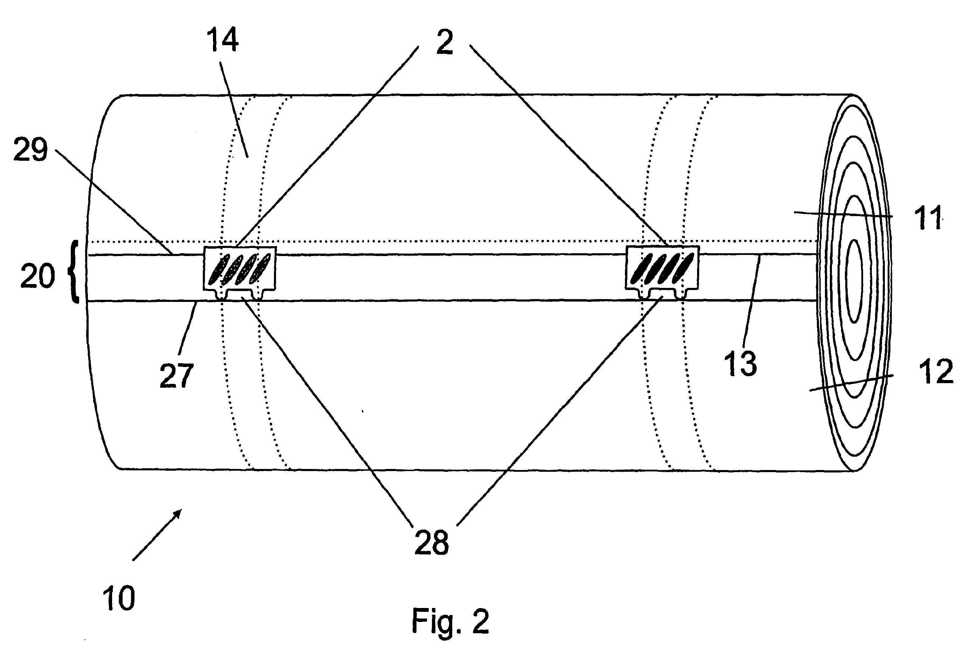

In Fig. 2 wird eine schematische Ansicht einer neuen Papierrolle 10 gezeigt, bei welcher die oberste Papierbahn 11 mit einem doppelseitigen oder integrierten Klebeband 20 auf der darunterliegenden Papierbahn 12 für den fliegenden Rollenwechsel fixiert ist. Das Klebeband 20 verläuft dabei über die gesamte Breite der neuen Rolle 10. In der Figur 2 sind erkennbar die vordere Kante 27 des Klebebandes 20, die vordere Kante 13 der obersten Papierbahn 11 sowie die hintere Kante 29 des Klebebandes 20, welche unterhalb der obersten Papierbahn 11 liegt. In der Zeichnung sind die Bereiche der Rolle 10, welche im Kontakt mit den Antriebsgurten liegen, als durch unterbrochene Linien begrenzter Bereich 14 gekennzeichnet.

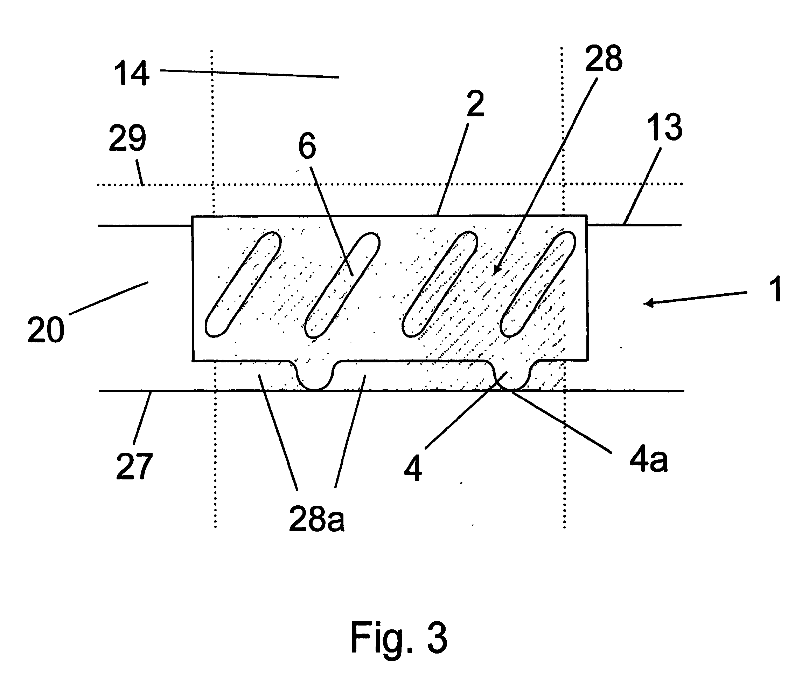

Eine Ausschnittvergrößerung der Figur 2 im Kontaktbereich 28 des Klebebandes 20 mit den Antriebsgurten zeigt Figur 3: Die Bereiche 28 (schraffierte Fläche) sind mit einem Abschnitt des Abdeckbandes 1 abgedeckt. Die Positionierhilfen 4 dienen zur exakten Positionierung des Abdeckbandes 1 auf dem Klebeband 20 für den fliegenden Rollenwechsel, indem die vorderen Bereiche 4a der Positionierhilfen 4 exakt an die Längskante 27 des Klebebandes 20 positioniert werden. Die im Bereich der Langlöcher 6 liegenden Flächen des Klebebandes 20 liegen weiterhin frei und verbleiben klebend, ebenso der vor dem Abdeckband 1 liegende Bereich 28a der Fläche 28 des Klebebandes 20.

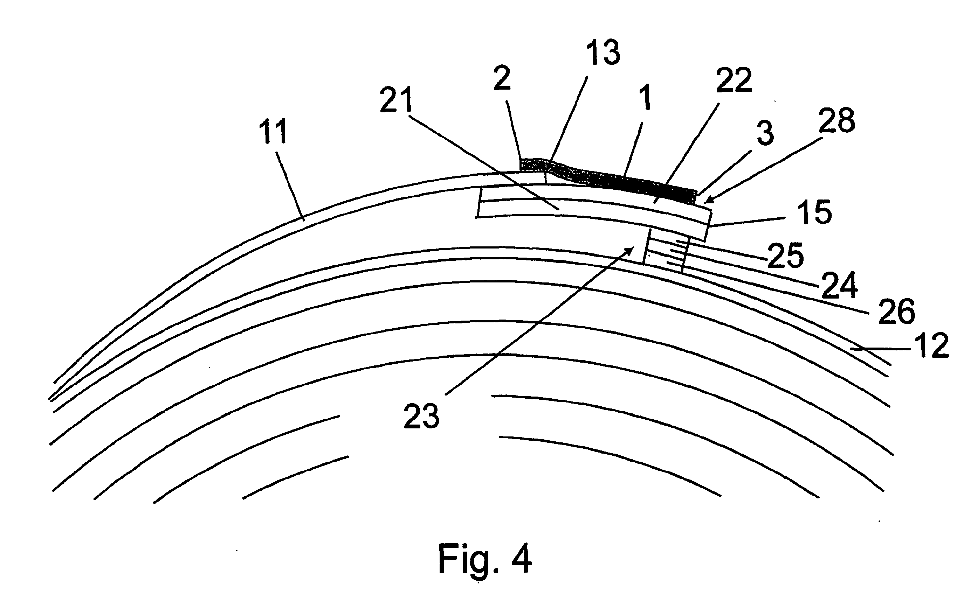

Fig. 4 zeigt eine Seitenansicht einer wie in Fig. 2 dargestellt für den fliegenden Rollenwechsel ausgerüsteten neuen Rolle 10 im Bereich der Abdeckungen 1. Es ist dargestellt, wie ein Klebeband 20 zur Vorbereitung des fliegenden Rollenwechsels hinter die oberste Papierbahn 11 geklebt ist, und zwar mit dem linken Teil. Die Bereiche 28 des Klebebandes 20, welche sich im Kontaktbereich mit den Antriebsgurten befinden, wurden durch das Abdeckband derart abgedeckt, daß kein Kontakt zwischen dem Klebeband 20 und den Antriebsgurten stattfinden kann. Um eine noch höhere Splicesicherheit zu erreichen, wird das Abdeckband 1 durch in Fig. 4 nicht dargestellte Positionierhilfen 4 in einem definierten Abstand hinter die vordere Kante 27 des Klebebandes plaziert, so daß eine durchgehende (mit Ausnahme der Positionshilfen) klebende Fläche 28a verbleibt.

Das Klebeband 20 weist einen Träger 21 aus schwach gekrepptem Papier auf, welche einseitig mit einer wasserlöslichen Selbstklebemasse 22 beschichtet ist. Die Gesamtdicke des Trägers 21 mit Selbstklebemasse 22 beträgt 0,088 mm, die Breite 150 mm. Am rechten Ende des Klebebandes 20 ist ein Streifen eines doppelseitig klebenden Klebebandes 23 unterklebt, bestehend aus einem Papierträger 24 aus Spaltpapier, beidseits beschichtet mit wasserlöslicher Selbstklebemasse 25 bzw. 26.
Die so ausgerüstete Papierrolle 10 ist fertig für den fliegenden Rollenwechsel. Die Selbstklebemasse 3 liegt offen außerhalb der mit dem Abdeckband 1 abgedeckten Bereiche und stellt für den fliegenden Rollenwechsel die Kontaktfläche zur ablaufenden Bahn dar. Die Kontaktfläche hat außerhalb der mit dem Abdeckband 1 abgedeckten Bereiche eine Breite von 120 mm und erstreckt sich im wesentlichen über die gesamte Papierrolle.

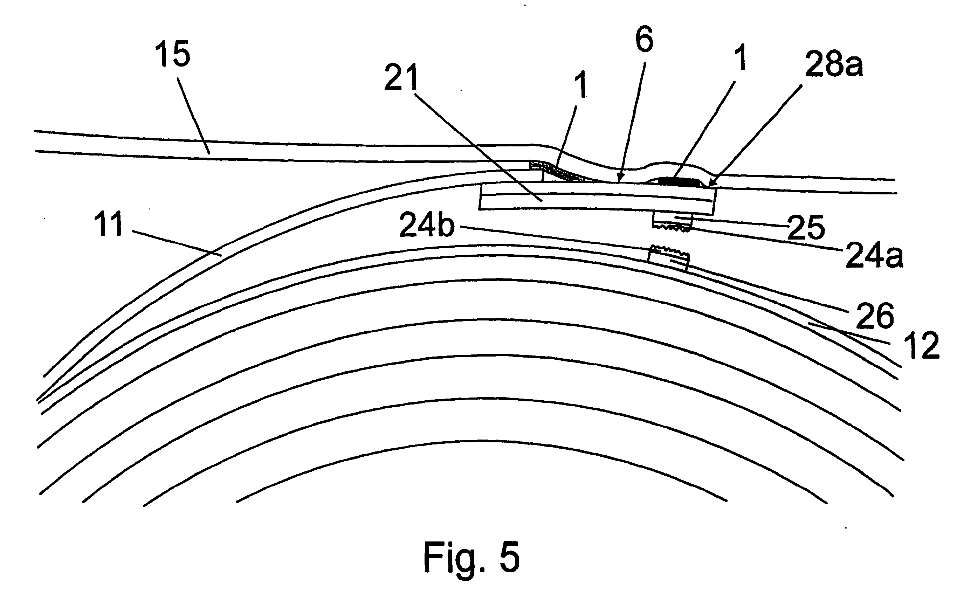

Die so ausgerüstete (neue) Papierrolle 10 wird neben die nahezu abgewickelte (alte) Papierrolle gebracht, an die die neue angesetzt werden soll. Die neue Papierrolle 10 wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden: Die ablaufende Bahn 15 wird mittels Andruckwelle mit dem Umfang der neuen Bahn 11 in Kontakt gebracht, die Selbstklebemasse 22 verklebt gemäß Fig. 5 mit der ablaufenden Bahn 15. Im Bereich des Abdeckbandes 1 wird eine hinreichende Verklebung durch Kontakt der alten Papierbahn 15 mit der Klebemasse 22 im Bereich der Langlöcher 6 sowie des Bereiches 28a gewährleistet.
Augenblicklich nach dem Klebekontakt spaltet der spaltfähige Papierträger 24 derart, daß ein Teil 24a auf dem Klebeband 20 verbleibt und dort die Selbstklebemasse 25 abdeckt, während der andere Teil 24b auf der Selbstklebemasse 26 verbleibt, welche auf der Papierbahn 12 klebt. Damit sind beide Selbstklebemassen 25 und 26 gewissermaßen neutralisiert, kleben nicht mehr und stören damit auch nicht im weiteren Prozeß in den Papierverarbeitungsmaschinen.

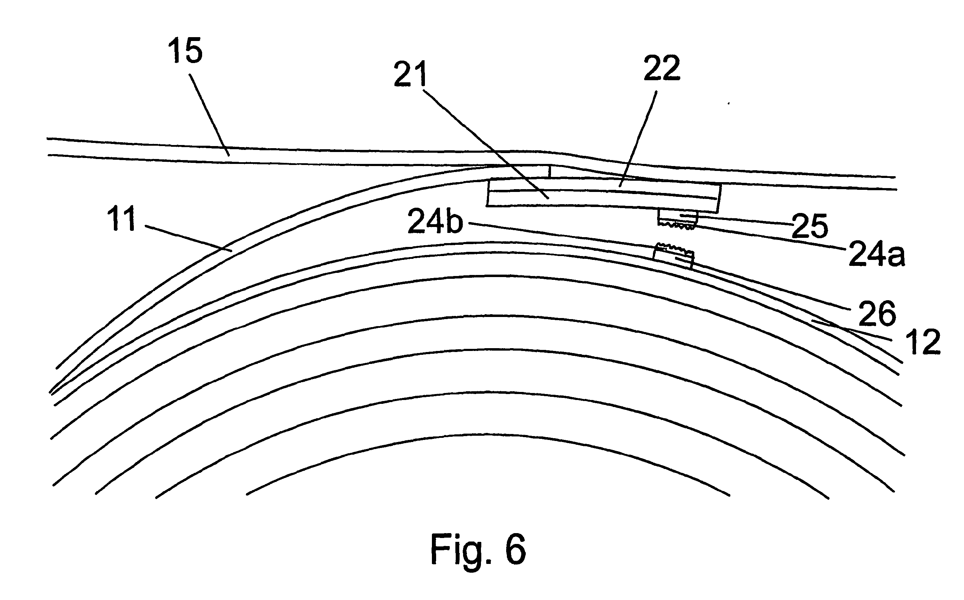

Fig. 6 zeigt die Situation entsprechend Fig. 5, aber in einem Bereich, der außerhalb des Kontaktbereiches 14 mit den Antriebsgurten liegt.

## Patentansprüche

1. Abdeckband zur zumindest partiellen Abdeckung eines Klebebandes für den fliegenden Rollenwechsel im Kontaktbereich mit einem Antriebsgurt, mit zwei Längskanten, einer Vorderseite und einer Rückseite, **dadurch gekennzeichnet, daß**
an zumindest einer der Längskanten (3) des Abdeckbandes (1) Positionierhilfen (4) angebracht sind, welche die Positionierung des Abdeckbandes (1) in einem definierten Abstand zur Kante (27) des Klebebandes (20) ermöglichen.

2. Abdeckband nach Anspruch 1, **dadurch gekennzeichnet, daß**
die Positionierhilfen (4) in Form von Zacken, Halbkreisen, Halbellipsen vorliegen.

3. Abdeckband nach zumindest einem der vorangehenden Ansprüche, **dadurch gekennzeichnet, daß**
die Positionierhilfen (4) eine Höhe H von 1 bis 7 mm, insbesondere von 2 bis 5 mm aufweisen und/oder äquidistant zueinander sind.

4. Abdeckband nach zumindest einem der vorangehenden Ansprüche, **gekennzeichnet durch** Aussparungen (6) in der Fläche, insbesondere in Form von Langlöchern, welche mit Ihrer Längsachse senkrecht oder in einem Winkel von bis zu 45 ° zur Längsrichtung des Abdeckbandes (1) verlaufen.

5. Abdeckband nach zumindest einem der vorangehenden Ansprüche, **gekennzeichnet durch** eine Dicke von 20 bis 120 µm, insbesondere von 35 bis 100 µm.

6. Abdeckband nach zumindest einem der vorangehenden Ansprüche, **gekennzeichnet durch** zumindest eine Schicht einer Selbstklebemasse.

7. Abdeckband nach zumindest einem der vorangehenden Ansprüche, **gekennzeichnet durch**
Perforationen und/oder Schnitte (5), welche senkrecht oder schräg zur Längsrichtung des Abdeckbandes (1) verlaufen.

8. Abdeckband nach zumindest einem der vorangehenden Ansprüche, **gekennzeichnet durch** eine definierte Länge L_{E} von 15 bis 40 mm, besonders von 15 bis 35 mm, ganz besonders von 17 bis 25 mm.

9. Abdeckband nach zumindest einem der vorangehenden Ansprüche, **dadurch gekennzeichnet, daß**
das Abdeckband (1) als Abdeckung eines selbstklebenden Klebebandes vorliegt.

10. Spliceverfahren für den fliegenden Rollenwechsel von auf Rollen aufgewickelten Flachbahnmaterial, bei welchem die oberste Papierbahn (11) einer neuen Rolle (10) mit einem Klebeband (20), welches mit zumindest einem Hauptträger (21), zumindest einer Schicht einer Selbstklebemasse (22) auf der Oberseite und zumindest einem selbstklebenden spaltfähigen System (23) auf der Unterseite ausgerüstet ist, an der darunterliegenden Bahn (12) fixiert wird und ein zum Spliceverfahren benötigter Teil der Selbstklebemasse (22) offenliegt, woraufhin die so ausgerüstete neue Rolle (10) neben eine fast gänzlich abgespulte zu ersetzende alte Rolle plaziert wird und durch Antriebsgurte auf die im wesentlichen gleiche Drehgeschwindigkeit wie diese beschleunigt wird, wobei zumindest der Großteil der Bereiche (28) des Klebebandes, welche sich im Kontaktbereich (14) mit den Antriebsgurten befinden, durch ein Abdeckband (1) abgedeckt werden, wobei die Positionierung des Abdeckbandes (1) unter Zuhilfenahme von Positionierungshilfen (4) am Abdeckband (1) geschieht, worauf die neue Rolle (10) dann gegen die alte Bahn (15) gedrückt wird, wobei die offenliegende Selbstklebemasse (22) des Klebebandes (20) mit der alten Bahn (15) bei im wesentlichen gleichen Geschwindigkeiten der Bahnen verklebt, während zugleich das spaltfähige System (23) derart spaltet, daß nach dem Spaltvorgang keine klebenden Bereiche offenliegen.

11. Spliceverfahren nach Anspruch 10, **dadurch** gekennzeichent, daß
als Abdeckband (1) ein solches nach zumindest einem der Ansprüche 1 bis 8 verwendet wird.

## Claims

1. Cover strip for at least partly covering an adhesive tape for flying splice in the area of contact with a drive belt, having two longitudinal edges, a face and a reverse, **characterized in that** positioning aids (4) are disposed on at least one of the longitudinal edges (3) of the cover strip (1), these positioning aids (4) allowing the cover strip (1) to be positioned at a defined distance from the edge (27) of the adhesive tape (20).

2. Cover strip according to claim 1, **characterized in that** the positioning aids (4) are in the form of teeth, semicircles and/or semiellipses.

3. Cover strip according to the preceding claims, **characterized in that** the positioning aids (4) have a height H of from 1 to 7 mm, in particular from 2 to 5 mm, and/or are equidistant from one another.

4. Cover strip according to at least one of the preceding claims, **characterized by** cutouts (6) in the surface, in particular in the form of elongate holes, whose longitudinal axis extends perpendicularly or at an angle of up to 45° with respect to the longitudinal direction of the cover strip (1).

5. Cover strip according to at least one of the preceding claims, **characterized by** a thickness of from 20 to 120 µm, in particular from 35 to 100 µm.

6. Cover strip according to at least one of the preceding claims, **characterized by** at least one layer of a self-adhesive composition.

7. Cover strip according to at least one of the preceding claims, **characterized by** perforations and/or slits (5) which extend perpendicularly or obliquely with respect to the longitudinal direction of the cover strip (1).

8. Cover strip according to at least one of the preceding claims, **characterized by** a defined length L_{E} of from 15 to 40 mm, in particular from 15 to 35 mm, very particularly from 17 to 25 mm.

9. Cover strip according to at least one of the preceding claims, **characterized in that** the cover strip (1) is in the form of a cover of a self-adhesive tape.

10. Splicing process for flying splice of flat web material wound up into rolls, in which the topmost paper web (11) of a new roll (10) is fixed to the underlying web (12) with an adhesive tape (20) which is provided with at least one main carrier (21), at least one layer of a self-adhesive composition (22) on the top face, and at least one self-adhesive cleavable system (23) on the underside, and a portion of the self-adhesive composition (22) which is required for the splicing process is exposed, whereupon the new roll (10) thus equipped is placed alongside an old, almost fully unwound roll which requires replacement and is accelerated to essentially the same rotational speed as said old roll by means of drive belts, with at least the major part of the areas (28) of the adhesive tape which are in the area of contact (14) with the drive belts being covered by a cover strip (1), the cover strip (1) being positioned with the aid of positioning aids (4) on the cover strip (1), after which the new roll (10) is pressed against the old web (15), with the exposed self-adhesive composition (22) of the adhesive tape (20) bonding to the old web (15) while the webs are at substantially the same speeds, while at the same time the cleavable system (23) cleaves in such a way that, after the cleaving operation, there are no exposed adhesive areas.

11. Splicing process according to claim 10, **characterized in that** the cover strip (1) used is a cover strip according to at least one of claims 1 to 8.

## Revendications

1. Bande de protection pour le recouvrement au moins partiel d'une bande adhésive en vue d'un changement de bobine à la volée dans la zone de contact avec une courroie d'entraînement, comportant deux bords longitudinaux, un bord antérieur et un bord arrière, **caractérisée en ce que**, sur au moins l'un des bords longitudinaux (3) de la bande de protection (1) se trouvent des auxiliaires de positionnement (4) qui permettent le positionnement de la bande de protection (1) à une distance définie du bord (27) de la bande adhésive (20).

2. Bande de protection suivant la revendication 1, **caractérisée en ce que** les auxiliaires de positionnement (4) sont en forme de dents, de demi-cercles, de demi-ellipses.

3. Bande de protection suivant au moins l'une quelconque des revendications qui précèdent, **caractérisée en ce que** les auxiliaires de positionnement (4) présentent une hauteur de 1 à 7 mm, en particulier de 2 à 5 mm et/ou sont équidistants.

4. Bande de protection suivant au moins l'une quelconque des revendications qui précèdent, **caractérisée par** des découpes (6) dans la surface, en particulier sous forme de perforations oblongues, qui s'étendent avec leur axe longitudinal perpendiculaire ou à un angle allant jusqu'à 45° par rapport à la direction longitudinale de la bande de protection (1).

5. Bande de protection suivant au moins l'une quelconque des revendications qui précèdent, **caractérisée par** une épaisseur de 20 à 120 µm, en particulier de 35 à 100 µm.

6. Bande de protection suivant au moins l'une quelconque des revendications qui précèdent, **caractérisée par** au moins une couche d'une masse autoadhésive.

7. Bande de protection suivant au moins l'une quelconque des revendications qui précèdent, **caractérisée par** des perforations et/ou des découpes (5) s'étendant perpendiculairement ou en oblique par rapport à l'axe longitudinal de la bande de protection (1).

8. Bande de protection suivant au moins l'une quelconque des revendications qui précèdent, **caractérisée par** une longueur définie L_{E} de 15 à 40 mm, en particulier de 15 à 35 mm, plus particulièrement de 17 à 25 mm.

9. Bande de protection suivant au moins l'une quelconque des revendications qui précèdent, **caractérisée en ce que** la bande de protection (1) est un recouvrement d'une bande adhésive autocollante.

10. Procédé de raccord pour le changement de bobine à la volée d'un matériau plat enroulé en bobines, dans lequel la couche de papier supérieure (11) d'une nouvelle bobine (10) est fixée, par une bande adhésive (20) équipée d'au moins un support principal (21), d'au moins une couche d'une masse autoadhésive (22) sur sa face supérieure et d'au moins un système autoadhésif dédoublable (23) sur sa face inférieure, à la couche inférieure (12) et qu'une partie de la masse autoadhésive (22) nécessaire au processus de raccord est exposée, après quoi la nouvelle bobine (10) ainsi équipée est placée à proximité d'une ancienne bobine pratiquement totalement dévidée et à remplacer, et est accélérée par des courroies d'entraînement à pratiquement la même vitesse de rotation que celle-ci, au moins la majeure partie des zones (28) de la bande adhésive qui se trouvent dans la zone de contact (14) avec les courroies d'entraînement étant recouverte par une bande de protection (1), le positionnement de la bande de protection (1) se faisant à l'aide d'auxiliaires de positionnement (4) sur la bande de protection (1), après quoi la nouvelle bobine (10) est alors pressée contre l'ancienne bande (15), la masse autoadhésive (22) exposée de la bande adhésive (20) se collant avec l'ancienne bande (15) lorsque les vitesses des bandes sont pratiquement identiques, tandis qu'en même temps le système dédoublable (23) se dédouble de manière à ce que, après le processus de raccord, il ne subsiste pas de zones adhésives exposées.

11. Procédé de raccord suivant la revendication 10, **caractérisé en ce que** l'on utilise comme bande de protection (1) une bande de protection suivant au moins l'une quelconque des revendications 1 à 8.
